# EUROPEAN PATENT APPLICATION

(11) **EP 4 192 061 A1**
(43) Date of publication of application: **07.06.2023**
(21) Application number: 20948092.0
(22) Date of filing: 07.08.2020
(51) Int. Cl.: H04W 8/22

(54) **SIGNALING TRANSMISSION METHOD AND APPARATUS**

(71) Applicant: Huawei Technologies Co., Ltd., Longgang Shenzhen, Guangdong 518129 (CN)
(72) Inventor: CHEN, Lei, Shenzhen, Guangdong 518129 (CN); WANG, Hong, Shenzhen, Guangdong 518129 (CN); XIE, Zonghui, Shenzhen, Guangdong 518129 (CN); YU, Haifeng, Shenzhen, Guangdong 518129 (CN)
(74) Representative: Gill Jennings & Every LLP
(86) International application number: PCT/CN2020/107864
(87) International publication number: WO 2022/027612

(57) **Abstract**

This application provides a signaling transmission method and an apparatus, to improve signaling transmission efficiency. The method includes: A first terminal device resumes at least one dedicated signaling radio bearer based on a stored context, where the first terminal device is in an inactive state; and the first terminal device sends a first message to a first radio access network device, where the first message includes first non-access stratum NAS signaling sent by the first terminal device to a core network device, and the first NAS signaling is carried in one of the at least one dedicated signaling radio bearer.

## Description

### TECHNICAL FIELD

This application relates to the communication field, and more specifically, to a signaling transmission method and an apparatus.

### BACKGROUND

In the field of conventional communication technologies, user equipment (user equipment, UE) initiates a connection establishment process, and may perform uplink transmission by using a dedicated radio signaling bearer after entering a connected state. However, signaling overheads of entering the connected state are far greater than an amount of data to be transmitted by the user equipment, and this leads to low efficiency of data transmission. Currently, many studies focus on early data transmission. Early data transmission means that the UE can perform data transmission without entering the connected state. This can effectively improve data transmission efficiency, and reduce UE power consumption.

However, a current early transmission technology mainly focuses on data transmission, and signaling transmission is not considered. Actually, data amounts of a part of signaling are small, but the signaling is reported frequently. If the UE frequently enters the connected state to perform signaling transmission, a power waste is caused. Therefore, early signaling transmission is a technical problem to be urgently resolved.

### SUMMARY

This application provides a signaling transmission method and an apparatus, to improve signaling transmission efficiency.

According to a first aspect, a signaling transmission method is provided. The method includes: A first terminal device resumes at least one dedicated signaling radio bearer based on a stored context, where the first terminal device is in an inactive state; and the first terminal device sends a first message to a first radio access network device, where the first message includes first non-access stratum NAS signaling sent by the first terminal device to a core network device, and the first NAS signaling is carried in one of the at least one dedicated signaling radio bearer.

Based on the foregoing technical solution, the first terminal device in the inactive state may send uplink signaling to the core network device without entering a connected state, so that signaling transmission efficiency can be effectively improved, and energy consumption of the first terminal device can be reduced.

In a possible implementation, the method further includes: The first terminal device receives a second message sent by the first radio access network device, where the second message includes second non-access stratum NAS signaling sent by the core network device to the first terminal device, and the second message is a response message for the first message.

Based on the foregoing technical solution, the first terminal device in the inactive state may receive downlink NAS signaling sent by the core network device without entering a connected state, so that signaling transmission efficiency can be effectively improved, and energy consumption of the first terminal device can be reduced.

In a possible implementation, the first message includes a radio resource control RRC resume request message.

In a possible implementation, the second message includes a radio resource control RRC resume message or a radio resource control RRC release message.

In a possible implementation, the first NAS signaling includes a positioning protocol message or a tracking area update message, and the second NAS signaling includes a positioning protocol message or a tracking area update response message.

According to a second aspect, a signaling transmission method is provided. The method includes: A first radio access network device receives a first message sent by a first terminal device, where the first message includes first non-access stratum NAS signaling sent by the first terminal device to a core network device, and the first terminal device is in an inactive state; and the first radio access network device sends a third message, where the third message includes the first NAS signaling.

In a possible implementation, the method further includes: The first radio access network device receives a fourth message, where the fourth message includes second non-access stratum NAS signaling sent by the core network device to the first terminal device; and the first radio access network device sends a second message to the first terminal device, where the second message includes the second NAS signaling, and the second message is a response message for the first message.

In a possible implementation, that the first radio access network device sends a third message includes: The first radio access network device sends the third message to the core network device; and that the first radio access network device receives a fourth message includes: The first radio access network device receives the fourth message sent by the core network device.

In a possible implementation, the third message includes a path switch request message; and the fourth message includes a path switch response message.

In a possible implementation, that the first radio access network device sends a third message includes: The first radio access network device sends the third message to a second radio access network device; and that the first radio access network device receives a fourth message includes: The first radio access network device receives the fourth message sent by the second radio access network device.

In a possible implementation, the third message includes a context obtaining request message and first indication information, and the first indication information indicates that the first NAS signaling includes a signaling type in a signaling or service data type; and the fourth message includes a context obtaining response message and second indication information, and the second indication information indicates that the second NAS signaling includes a signaling type in a signaling or service data type.

According to a third aspect, a signaling transmission method is provided. The method includes: A second radio access network device receives a third message sent by a first radio access network device, where the third message includes first non-access stratum NAS signaling sent by a first terminal device to a core network device, and the first terminal device is in an inactive state; and the second radio access network device sends a fifth message to the core network device, where the fifth message includes the first NAS signaling.

In a possible implementation, the method further includes: The second radio access network device receives a sixth message sent by the core network device, where the sixth message includes second non-access stratum NAS signaling sent by the core network device to the first terminal device; and the second radio access network device sends a fourth message to the first radio access network device, where the fourth message includes the second NAS signaling.

In a possible implementation, the fifth message includes an uplink non-access stratum NAS transport message; and the sixth message includes a downlink non-access stratum NAS transport message.

According to a fourth aspect, a signaling transmission method is provided. The method includes: A core network device receives a third message sent by a first radio access network device, where the third message includes first non-access stratum NAS signaling sent by a first terminal device to the core network device, and the first terminal device is in an inactive state.

In a possible implementation, the method further includes: The core network device sends a fourth message to the first radio access network device, where the fourth message includes second non-access stratum NAS signaling sent by the core network device to the first terminal device.

In a possible implementation, the third message includes a path switch request message; and the fourth message includes a path switch response message.

According to a fifth aspect, a signaling transmission method is provided. The method includes: A core network device receives a fifth message sent by a second radio access network device, where the fifth message includes first non-access stratum NAS signaling sent by a first terminal device to the core network device, and the first terminal device is in an inactive state.

In a possible implementation, the method further includes: The core network device sends a sixth message to the second radio access network device, where the sixth message includes second non-access stratum NAS signaling sent by the core network device to the first terminal device.

In a possible implementation, the fifth message includes an uplink non-access stratum NAS transport message; and the sixth message includes a downlink non-access stratum NAS transport message.

According to a sixth aspect, a signaling transmission method is provided. The method includes: A first terminal device determines a seventh message, where the seventh message includes first non-access stratum NAS signaling sent by the first terminal device to a core network device and third indication information, the third indication information indicates that the first NAS signaling includes a signaling type in a signaling or service data type, and the first terminal device is in a non-connected state; and the first terminal device sends the seventh message to a first radio access network device by using a common signaling radio bearer.

In a possible implementation, the method further includes: The first terminal device receives an eighth message sent by the first radio access network device, where the eighth message includes second non-access stratum NAS signaling sent by the core network device to the first terminal device and fourth indication information, the fourth indication information indicates that the second NAS signaling includes a signaling type in a signaling or service data type, and the eighth message is a response message for the seventh message.

In a possible implementation, the seventh message includes an early data transmission request message; and the eighth message includes an early data transmission complete message, and the early data transmission request message includes an identifier of the first terminal device.

In a possible implementation, the first NAS signaling includes a positioning protocol message or a tracking area update message, and the second NAS signaling includes a positioning protocol message or a tracking area update response message.

According to a seventh aspect, a signaling transmission method is provided. The method includes: A first radio access network device receives a seventh message sent by a first terminal device, where the seventh message includes first non-access stratum NAS signaling sent by the first terminal device to a core network device and third indication information, the third indication information indicates that the first NAS signaling includes a signaling type in a signaling or service data type, and the first terminal device is in a non-connected state; and the first radio access network device sends a ninth message to the core network device, where the ninth message includes the first NAS signaling.

In a possible implementation, the method further includes: The first radio access network device receives a tenth message sent by the core network device, where the tenth message includes second non-access stratum NAS signaling sent by the core network device to the first terminal device; and the first radio access network device sends an eighth message to the first terminal device, where the eighth message includes the second non-access stratum NAS signaling sent by the core network device to the first terminal device and fourth indication information, and the fourth indication information indicates that the second NAS signaling includes a signaling type in a signaling or service data type.

In a possible implementation, the first terminal device is in an inactive state; and the ninth message and the tenth message each include an identifier of the first terminal device.

In a possible implementation, the first terminal device is in an idle state; the ninth message includes an initial message used to establish a next generation NG interface; and the tenth message includes a downlink non-access stratum generic transport message.

According to an eighth aspect, a signaling transmission method is provided. The method includes: A core network device receives a ninth message sent by a first radio access network device, where the ninth message includes first non-access stratum NAS signaling sent by a first terminal device to the core network device, and the first terminal device is in a non-connected state.

In a possible implementation, the method further includes: The core network device sends a tenth message to the first radio access network device, where the tenth message includes second non-access stratum NAS signaling sent by the core network device to the first terminal device, and the tenth message is a response message for the ninth message.

According to a ninth aspect, a communication apparatus is provided, and includes a unit configured to implement a function of the method in any one of the first aspect to the eighth aspect or the possible implementations of the first aspect to the eighth aspect.

According to a tenth aspect, a communication chip is provided, and includes a processor and a communication interface. The processor is configured to read instructions to perform the method in any one of the first aspect to the eighth aspect or the possible implementations of the first aspect to the eighth aspect.

According to an eleventh aspect, a communication device is provided, and includes a processor and a transceiver. The transceiver is configured to: receive computer code or instructions, and transmit the computer code or the instructions to the processor, and the processor runs the computer code or the instructions, to perform the method in any one of the first aspect to the eighth aspect or the possible implementations of the first aspect to the eighth aspect.

According to a twelfth aspect, a communication device is provided, and includes a memory and a processor. The memory is configured to store a computer program, and the processor is configured to execute the computer program stored in the memory, so that the communication device performs the method in any one of the first aspect to the eighth aspect or the possible implementations of the first aspect to the eighth aspect.

According to a thirteenth aspect, a computer-readable storage medium is provided. The computer-readable medium stores a computer program; and when the computer program is run on a computer, the computer is enabled to perform the method in any one of the first aspect to the eighth aspect or the possible implementations of the first aspect to the eighth aspect.

### BRIEF DESCRIPTION OF DRAWINGS

FIG. 1 is a schematic diagram of a protocol architecture for transmitting positioning-related signaling between a terminal device and a location management function;
FIG. 2 is a schematic diagram of a relationship between an RRC_connected state, an RRC_inactive state, and an RRC idle state of UE;
FIG. 3 is a schematic interaction flowchart of an early data transmission method;
FIG. 4 is a schematic interaction flowchart of another early data transmission method;
FIG. 5 is a schematic interaction flowchart of a signaling transmission method according to an embodiment of this application;
FIG. 6 is a schematic interaction flowchart of another signaling transmission method according to an embodiment of this application;
FIG. 7 is a schematic interaction flowchart of another signaling transmission method according to an embodiment of this application;
FIG. 8 is a schematic interaction flowchart of another signaling transmission method according to an embodiment of this application;
FIG. 9 is a schematic interaction flowchart of another signaling transmission method according to an embodiment of this application;
FIG. 10 is a schematic interaction flowchart of another signaling transmission method according to an embodiment of this application;
FIG. 11 is a schematic block diagram of a communication apparatus according to an embodiment of this application;
FIG. 12 is a schematic block diagram of another communication apparatus according to an embodiment of this application; and
FIG. 13 is a schematic block diagram of a communication device according to an embodiment of this application.

### DESCRIPTION OF EMBODIMENTS

The following describes technical solutions in this application with reference to the accompanying drawings.

Embodiments of this application may be applied to a long term evolution (long term evolution, LTE) system, a 5th generation (5th generation, 5G) system, a new communication system that appears in the future, or the like.

A terminal device in embodiments of this application may include various handheld devices, vehiclemounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smart phone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

In the field of conventional communication technologies, the UE initiates a connection establishment process, and may perform uplink transmission by using a dedicated radio signaling bearer after entering a connected state. However, signaling overheads of entering the connected state are far greater than an amount of data to be transmitted by the UE, and this leads to low efficiency of data transmission. Currently, many studies focus on early data transmission. Early data transmission means that the UE can perform data transmission without entering the connected state. This can effectively improve data transmission efficiency, and reduce UE power consumption.

However, a current early transmission technology mainly focuses on data transmission, and signaling transmission is not considered. Actually, data amounts of a part of signaling are small, but the signaling is reported frequently. If the UE frequently enters the connected state to perform signaling transmission, a power waste is caused.

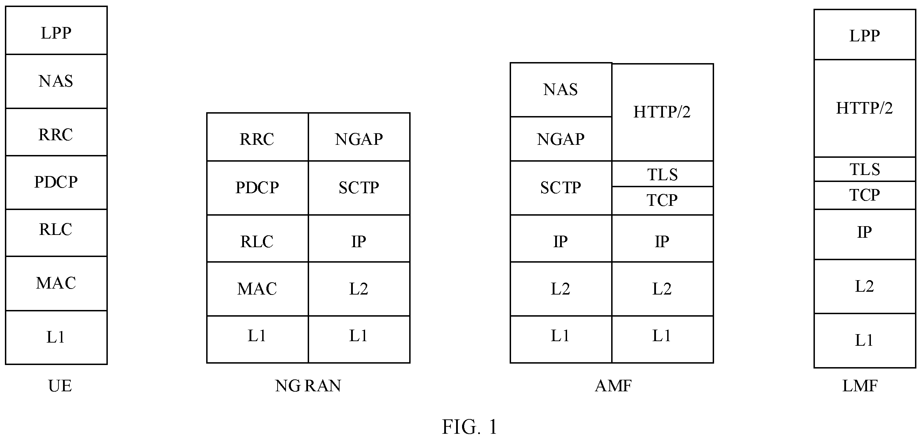

For example, in a positioning technology, both the current LTE and new radio (new radio, NR) support a cellular network-based positioning technology. Positioning-related signaling transmitted between UE and a location management function (location management function, LMF) is carried in an LTE positioning protocol (LTE positioning protocol, LPP) message, the LPP message is encapsulated in non-access stratum (non-access stratum, NAS) signaling when being transmitted between the UE and an access and mobility management function (access and mobility management function, AMF), and then the NAS signaling is transmitted between the UE and a base station by using an RRC message. A protocol architecture is shown in FIG. 1, where L1 is a wireless air interface physical layer or a wired physical layer, L2 is a data link layer, and SCTP is the stream control transmission protocol (stream control transmission protocol, SCTP). NGAP is an application layer protocol of an interface between the base station and the AMF. TLS is the transport layer security protocol (transport layer security protocol). IP is the internet protocol (internet protocol). TCP is the transmission control protocol (transmission control protocol). HTTP/2 is the Version 2 hypertext transfer protocol. It should be noted that, FIG. 1 is a schematic diagram, and this solution may alternatively be applied to another protocol architecture. The LPP message transmitted by the UE to the LMF may include a positioning measurement message of the UE. However, in some scenarios, the positioning measurement message needs to be frequently reported to the LMF.

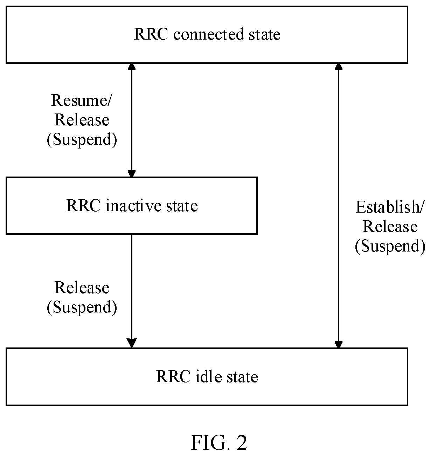

For ease of understanding of embodiments of this application, a process in which the UE enters a radio resource control (radio resource control, RRC) inactive (inactive) state from an RRC connected (connected) state, and then enters the RRC_connected state from the RRC_inactive state is briefly described. FIG. 2 is a schematic diagram of a relationship between an RRC_connected state, an RRC_inactive state, and an RRC idle (idle) state of UE. The RRC_inactive state can be changed from the RRC_connected state by using an RRC release (release) message. When the UE is released from the RRC_connected state to the RRC_inactive state, a serving base station allocates an inactive-radio network temporary identifier (inactive-radio network temporary identifier, I-RNTI) to the UE, and stores a context of the UE by using the identifier. The base station is also referred to as an anchor base station of the UE. When sending a connection resume request message, the UE includes the I-RNTI identifier in the message, and sends the message to a target base station, and the target base station obtains the context of the UE from the anchor base station based on the I-RNTI identifier. In this process, to ensure security of an access stratum, specific security processing is performed, and mainly includes the following parts. The access stratum is a protocol layer required for communication between the terminal device and the base station. For NR, the access stratum includes a physical (PHY) layer, a MAC layer, a radio link control layer, and a packet data convergence protocol layer. The security of the access stratum is security of information transmission between the terminal device and the base station.
(1) When UE changes from an RRC_connected state to an RRC_inactive state, an RRC release message sent by a base station to the UE not only carries an I_RNTI, but also carries a network color code (network color code, NCC), where the NCC is used for key derivation.
(2) An anchor base station deletes access stratum keys: K_RRCenc, K_UPenc, and K_UPint of the UE, but retains K RRCint, where K RRCenc is used for control plane data encryption, K UPenc is used for user plane data encryption, K UPint is used for user plane data integrity protection, and K RRCint is used for control plane data integrity protection. If an NCC sent by the anchor base station to the UE is new and belongs to an unused {NCC, NH} pair, the anchor base station retains the {NCC, NH} pair, and deletes a current access stratum (access stratum, AS) key K_gNB. If an NCC sent by the anchor base station to the UE is associated with a current key K_gNB, the AS key K_gNB and the NCC are retained.
(3) When the UE in the connected state receives, from the anchor base station, the RRC release message including the I_RNTI and the NCC, the UE first checks a message authentication code for integrity (message authentication code for integrity, MAC-I) of the packet data convergence protocol (packet data convergence protocol, PDCP), to verify whether integrity of the RRC release message is correct. If the verification succeeds, the UE stores a context of the UE together with the received NCC, deletes K _RRCenc, K _UPenc, and K_UPint, and retains K_RRCint. If the stored NCC is irrelevant to the current K_gNB, the current K_gNB is deleted. If the stored NCC is consistent with the current K_gNB, the current K_gNB is retained. It should be understood that the context of the UE includes a configuration of a dedicated signaling radio bearer (signaling radio bearer, SRB), for example, an SRB 1 or an SRB 2.
(4) When the UE sends an RRC resume (resume) message to enter the connected state, the RRC resume message should carry the I_RNTI and a short MAC-I, where the short MAC-I is a 16-bit authentication message. The UE uses a cell radio network temporary identifier (cell radio network temporary identifier, C-RNTI) when the UE works in a source cell of the anchor base station, a physical cell identifier (physical cell identifier, PCI) of the source cell, and a cell identifier (identifier, ID) of a current cell as inputs, and uses other parameters including K RRCint as inputs of an integrity protection algorithm, to calculate the short MAC-I.
(5) After receiving the RRC resume message sent by the UE, a target base station finds the anchor base station based on the I-RNTI, and sends a UE context request message to the anchor base station through an Xn interface between the base stations, where the request message includes the I-RNTI, the short MAC-I, and a cell ID of the target base station.
(6) After receiving the UE context request message sent by the target base station, the anchor base station finds the stored context of the UE based on the I-RNTI. The anchor base station calculates a short MAC-I based on previously stored K_RRCint by using a same method as that in (4), and verifies the short MAC-I and the short MAC-I in the context request message sent by the target base station. If the verification succeeds, the anchor base station derives new K_gNB* by using the cell ID of the target base station, a carrier frequency of a cell of the target base station, and K_gNB stored in the anchor base station or the NH indicated by the NCC. The anchor base station sends a response message to the target base station, where the message includes the context of the UE, the newly derived K_gNB^{∗}, and an NCC related to K_gNB^{∗}.
(7) After obtaining the context of the UE, the target base station checks whether the target base station supports integrity protection and encryption algorithms in the context. If the target base station supports the algorithms, the target base station derives K_RRCint, K _RRCenc, K _UPenc, and K_UPint by using the algorithms in the context and obtained K_gNB^{∗}.
(8) After or when sending the RRC resume message to the target base station, the UE uses a PCI of a target cell, a frequency of the target cell, and K_gNB or the NH identified by the stored NCC as inputs, to derive new K_gNB*, and further derive K_RRCint, K _RRCenc, K UPenc, and K UPint based on K_gNB^{∗}.
(9) So far, the target base station may send data to the UE by using K_RRCint, K _RRCenc, K UPenc, and K UPint that are derived by the target base station, and the UE may receive the data sent by the target base station based on K RRCint, K RRCenc, K UPenc, and K UPint that are derived by the UE.

After receiving the RRC release message, the UE can be released (suspended) from the RRC_connected state to the RRC_inactive or an RRC_idle state. After receiving the RRC release message, the UE in the RRC_inactive state can be released (suspended) from the RRC_inactive state to the RRC_idle state. After receiving the RRC resume message, the UE in the RRC_inactive or the RRC_idle state may enter the RRC_connected state.

For ease of understanding of embodiments of this application, the signaling radio bearer (signaling radio bearer, SRB) is briefly described. In LTE or NR, the SRB is used to transmit an RRC message and a NAS message. Transmission channels of the SRB include an SRB 0, an SRB 1, an SRB 2, and an SRB 3. The SRB 0 uses a common control channel (common control channel, CCCH), and the SRB 1, the SRB 2, and the SRB 3 each use a dedicated control channel (dedicated control channel, DCCH). The SRB 2 is used to carry NAS signaling. The SRB 1 may also be used to transmit the NAS signaling before the SRB 2 is established. In a dual connectivity application scenario, the SRB 0, the SRB 1, and the SRB 2 each are used for signaling transmission between the UE and a master base station, and the SRB 3 is used for signaling transmission between the UE and a secondary base station.

The RRC resume request (radio resource control resume request, RRC resume request) message, an RRC early data transmission request (radio resource control early data transmission request, RRC EDT request) message, and an RRC early data transmission complete (radio resource control early data transmission complete, RRC EDT complete) message in embodiments of this application are carried in the SRB 0. The RRC resume (radio resource control resume, RRC resume) message and the RRC release (radio resource control release, RRC release) message in embodiments of this application are carried in the SRB 1.

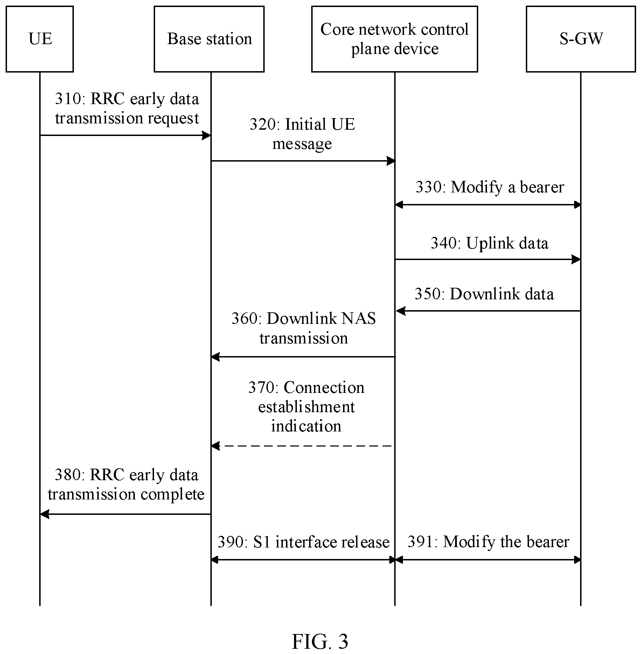

Currently, an early data transmission technology is widely used. FIG. 3 is a schematic interaction flowchart of an early data transmission method. The method specifically includes the following steps.

310: After obtaining an uplink scheduling grant (uplink grant, UL grant) in a random access process, UE in an idle state sends an RRC EDT request message to a base station. The message includes an S-temporary mobile subscriber identity (s-temporary mobile subscriber identity, S-TMSI) of the UE, a link establishment cause (data transmission or delay-tolerance service), and dedicated info NAS (dedicated info NAS), where the dedicated info NAS includes uplink data to be sent by the UE.

320: After receiving the RRC EDT request message of the UE, the base station sends an initial UE message (initial UE message) to a core network control plane device to establish an S1 interface for the UE, where the core network control plane device includes a mobility management entity (mobility management entity, MME) or an AMF, and the initial UE message carries a NAS data protocol data unit (NAS data protocol data unit, NAS DATA PDU), which carries the uplink data to be sent by the UE.

330: The core network control plane device and a serving gateway (serving gateway, S-GW) perform a bearer modification operation of the UE.

340: The core network control plane device sends, to the S-GW, the uplink data to be sent by the UE.

350: If the S-GW just has downlink data of the UE, the S-GW sends the downlink data of the UE to the core network control plane device.

360: If the core network control plane device receives the downlink data of the UE sent by the S-GW, the core network control plane device includes the downlink data in a downlink NAS DATA PDU and sends the downlink NAS DATA PDU to the base station.

370: The core network control plane device may send a connection establishment indication (connection establishment indication) to the UE, to notify the base station that the S1 interface for the UE has been established.

380: After receiving the downlink data of the UE, the base station includes the dedicated info NAS in an RRC EDT complete message, and sends the RRC EDT complete message to the UE, where the dedicated info NAS carries the downlink data.

390: The base station and the core network control plane device release the S1 interface of the UE.

391: The core network control plane device and the S-GW modify a bearer of the UE.

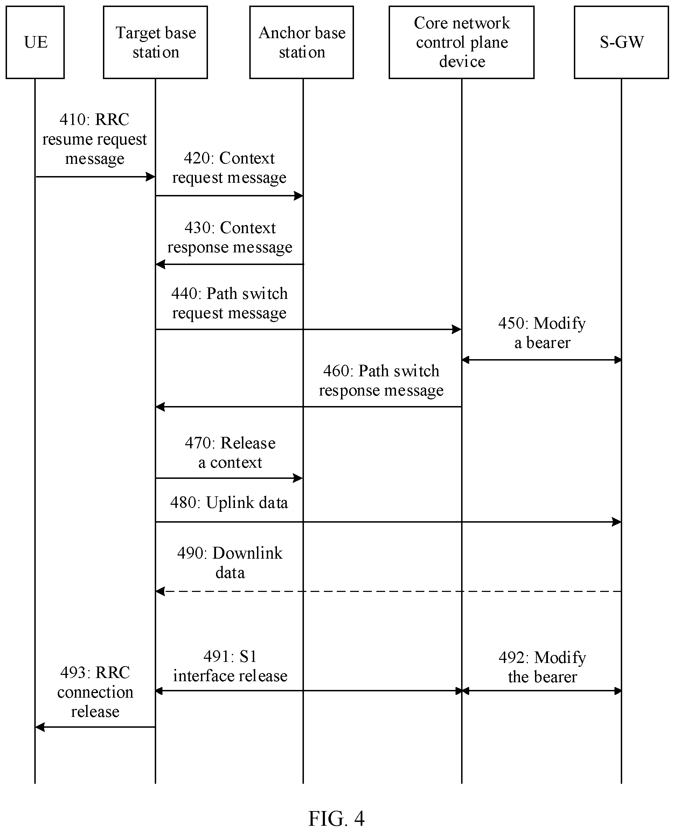

FIG. 4 is a schematic interaction flowchart of another early data transmission method. The method specifically includes the following steps.

410: After obtaining a UL grant in a random access process, UE in an inactive state sends, to a target base station, an RRC resume request message and uplink data to be sent by the UE, where the uplink data is carried in a data radio bearer (data radio bearer, DRB).

420: After receiving the RRC resume request message, the target base station sends a context request message to an anchor base station, to obtain a context of the UE. It should be understood that the anchor base station is an original serving base station of the UE, and the anchor base station is also a base station that releases the UE from a connected state to the inactive state.

430: The anchor base station sends a context response message to the target base station based on the received context request message, and sends the context of the UE to the target base station.

440: After obtaining the context of the UE, the target base station sends a path switch request (path switch request) message to a core network control plane device.

450: After receiving the path switch request message, the core network control plane device and an S-GW modify a bearer of the UE.

460: The core network control plane device sends a path switch response (path switch response) message to the target base station.

470: The target base station notifies the anchor base station to release the context of the UE.

480: The target base station sends the uplink data of the UE to the S-GW based on an indication in the path switch response message.

490: If the S-GW has downlink data of the UE, the S-GW sends the downlink data to the target base station.

491: The target base station interacts with the core network control plane device to release an S 1 interface of the UE.

492: The core network control plane device and the S-GW modify the bearer of the UE.

493: The target base station sends an RRC connection release (RRC connection release) message to the UE, and sends the downlink data of the UE to the UE, where the downlink data is also carried in the DRB.

The foregoing early data transmission solution cannot support early signaling transmission. Therefore, early signaling transmission is an urgent technical problem to be resolved.

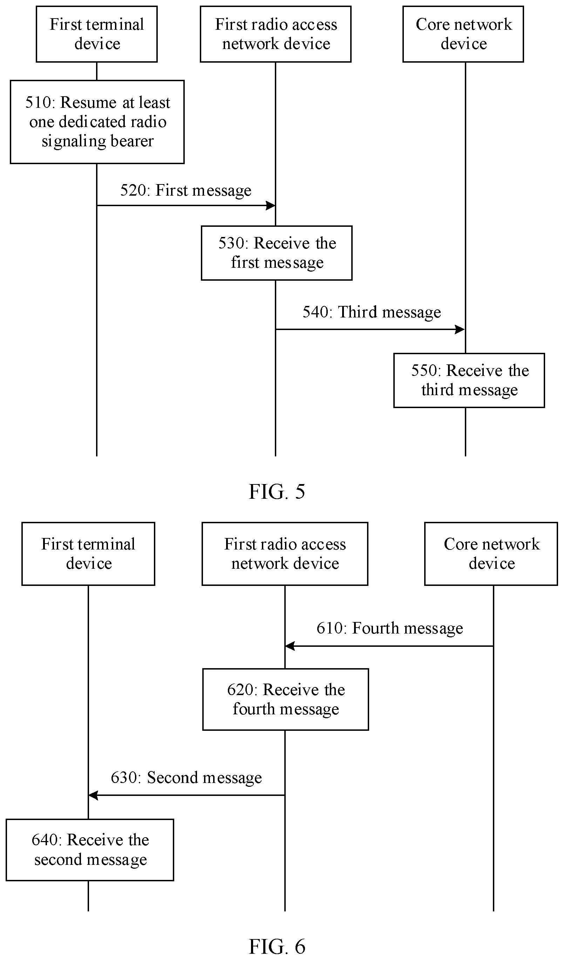

An embodiment of this application provides a signaling transmission method, to improve signaling transmission efficiency and reduce UE energy consumption. FIG. 5 is a schematic interaction flowchart of a signaling transmission method.

510: When a first terminal device is released from a connected state to an inactive state by an original serving base station (a second radio access network device), and when needing to transmit uplink NAS signaling, the first terminal device resumes at least one dedicated signaling radio bearer based on a stored context, where the dedicated radio signaling bearer includes an SRB 1, an SRB 2, an SRB 3, or another dedicated SRB that is subsequently extended. It should be understood that, the second radio access network device is an anchor base station of the first terminal device or an access network device that finally provides a service.

It should be understood that, in this embodiment of this application, the connected state is the foregoing RRC_connected state, the inactive state is the foregoing RRC_inactive state, and an idle state is the foregoing RRC_idle state. That the first terminal device is in the connected state means that an RRC connection has been established between the first terminal device and an access network device. That the first terminal device is in the inactive state means that the RRC connection between the first terminal device and the access network device is released, but the first terminal device and the access network device that finally provides the service for the first terminal device store the context of the first terminal device. That the first terminal device is in the idle state means that the RRC connection between the first terminal device and the access network device is released, and the first terminal device and the access network device that finally provides the service for the first terminal device release the context of the first terminal device.

520: The first terminal device sends a first message to a first radio access network device, where the first message includes first NAS signaling sent by the first terminal device to a core network device, and the first NAS signaling is carried in one of the at least one dedicated signaling radio bearer. For example, the first NAS signaling may be carried in the SRB 1, the SRB 2, the SRB 3, or the another dedicated SRB that is subsequently extended. The first NAS signaling may include a positioning protocol message or a tracking area update message. It should be understood that, the first radio access network device is a target base station, namely, an access network device that provides a service for a cell in which the first terminal device current camps, or an access network device that provides a service for a current serving cell of the first terminal device. The positioning protocol message includes a positioning-related message of a terminal device, for example, a positioning capability-related message and a message related to exchanging positioning-related measurement results. The tracking area update message is a tracking area update request message sent by the terminal device to an AMF after the terminal device moves out of a tracking area previously indicated by the AMF, so that the AMF can successfully page the terminal device.

Optionally, after resuming the at least one dedicated signaling radio bearer, the first terminal device may derive a new key to encrypt the dedicated signaling radio bearer. In this case, the dedicated signaling radio bearer used to carry the first NAS signaling is encrypted by using the key.

Optionally, the first message further includes an RRC resume request message, and the first terminal device sends the RRC resume request message and the first NAS signaling together to the first radio access network device. Specifically, the RRC resume request message is carried in a common signaling radio bearer SRB 0, and the first NAS signaling is carried in the dedicated signaling radio bearer, for example, the SRB 1, the SRB 2, or the SRB 3. It should be understood that, the first message may alternatively be another RRC message, and the message may include information such as an identifier of the first terminal device.

530: The first radio access network device receives the first message sent by the first terminal device, where the first message includes the first NAS signaling sent by the first terminal device to the core network device.

540: The first radio access network device sends a third message to the core network device based on the received first message, where the third message includes the first NAS signaling sent by the first terminal device to the core network device. The core network device may be an access and mobility management function (access and mobility management function, AMF) in a 5G communication system or an MME in an LTE communication system.

Specifically, optionally, if the first message received by the first radio access network device includes the RRC resume request message, the first radio access network device sends, to the second radio access network device, a request message for obtaining the context of the first terminal device, to obtain the context of the first terminal device. After obtaining the context of the first terminal device, the first radio access network device decrypts the first NAS signaling in the dedicated signaling radio bearer, and sends the third message to the core network device. The third message may be a path switch request message, and the third message carries the first NAS signaling. It should be understood that, the second radio access network device is an original serving base station of the first terminal device, and may also be referred to as an anchor base station.

550: The core network device receives the third message sent by the first radio access network device, and obtains, from the third message, the first NAS signaling sent by the first terminal device.

In the technical solution in this embodiment of this application, the first terminal device in the inactive state may send uplink signaling to the core network device without entering the connected state, so that signaling transmission efficiency can be effectively improved, and energy consumption of the first terminal device can be reduced.

Optionally, after receiving the first NAS signaling sent by the first terminal device, if the core network device has downlink signaling of the first terminal device, the core network device sends the downlink signaling to the first terminal device. FIG. 6 is a schematic interaction flowchart of another signaling transmission method.

610: After receiving first NAS signaling sent by a first terminal device, if a core network device has downlink signaling of the first terminal device, the core network device sends a fourth message to a first radio access network device, where the fourth message includes second NAS signaling sent by the core network device to the first terminal device, and the fourth message may be a response message for the third message in FIG. 5. Specifically, the second NAS signaling may include a positioning protocol message or a tracking area update response message.

Specifically, optionally, if the third message is a path switch request message, the fourth message may be a path switch response message, and the path switch response message carries the second NAS signaling sent by the core network device to the first terminal device.

Specifically, optionally, the third message includes identity information of the first terminal device, and other information in an initial terminal device message (INITIAL UE MESSAGE), for example, an identifier of a public land mobile network selected by a terminal device, an ID of an AMF set, and a link establishment cause value.

Optionally, the third message may be the initial UE message (INITIAL UE MESSAGE), and includes one piece of indication information, indicating that the third message is not used to establish an interface from the first radio access network device to an AMF for the terminal device.

620: The first radio access network device receives the fourth message sent by the core network device.

630: The first radio access network device sends a second message to the first terminal device based on the received fourth message, where the second message includes the second NAS signaling sent by the core network device to the first terminal device, and the second message may be a response message for the first message in FIG. 5.

The second NAS signaling is carried in at least one dedicated signaling radio bearer. To be specific, the second NAS signaling may be carried in an SRB 1, an SRB 2, an SRB 3, or another dedicated SRB that is subsequently extended. If the first terminal device resumes only one dedicated signaling radio bearer, the first NAS signaling and the second NAS signaling can be carried only in a same SRB. If the first terminal device resumes two or more dedicated signaling radio bearers, the first NAS signaling and the second NAS signaling may be carried in a same SRB, or may be carried in different SRBs.

Optionally, the second message includes a radio resource control RRC resume message or a radio resource control RRC release message. The first radio access network device may send the radio resource control RRC resume message and the second NAS signaling together to the first terminal device, or the first radio access network device may send the radio resource control RRC release message and the second NAS signaling together to the first terminal device. Specifically, the RRC resume message and the RRC release message are carried in the SRB 1. The second NAS signaling is carried in the SRB 1 or the SRB 2, or may be carried in the SRB 3 or the another dedicated SRB that is subsequently extended.

640: The first terminal device receives the second message sent by the first radio access network device, and obtains, from the second message, the second NAS signaling sent by the core network device.

In the technical solution in this embodiment of this application, the first terminal device in an inactive state may receive downlink NAS signaling sent by the core network device without entering a connected state, so that signaling transmission efficiency can be effectively improved, and energy consumption of the first terminal device can be reduced.

It should be understood that, if the core network device does not receive the first NAS signaling sent by the first terminal device, but has the downlink signaling of the first terminal device, the core network device may also send the downlink signaling to the first terminal device by using a specific procedure in FIG. 6.

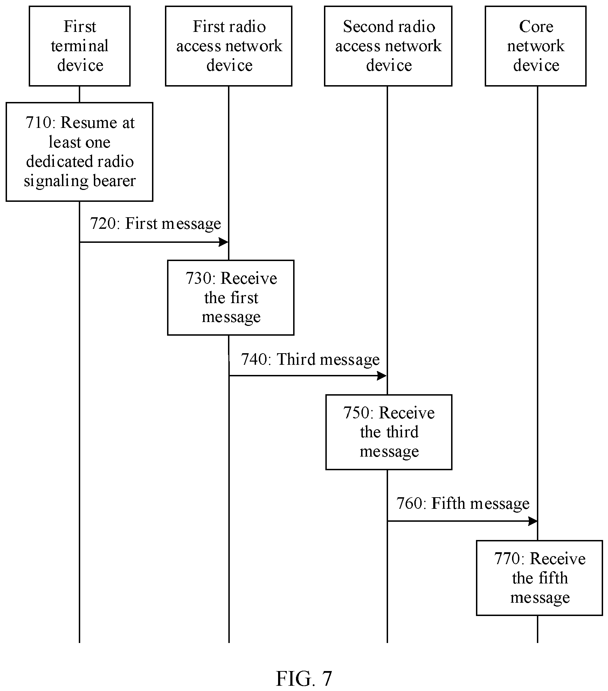

In the foregoing method, the first access network device transmits signaling to the core network device. An embodiment of this application provides another signaling transmission method, so that signaling can be transmitted to a core network device by using a first access network device (a target base station) and a second radio access network device (an original serving base station). FIG. 7 is a schematic interaction flowchart of another signaling transmission method.

710: A first terminal device is released from a connected state to an inactive state by an original serving base station (a second radio access network device), and when needing to transmit uplink NAS signaling, the first terminal device resumes at least one dedicated signaling radio bearer based on a stored context, where the dedicated radio signaling bearer includes an SRB 1, an SRB 2, an SRB 3, or another dedicated SRB that is subsequently extended.

720: The first terminal device sends a first message to a first radio access network device, where the first message includes first NAS signaling sent by the first terminal device to a core network device, and the first NAS signaling is carried in one of the at least one dedicated signaling radio bearer. For example, the first NAS signaling may be carried in the SRB 1, the SRB 2, the SRB 3, or the another dedicated SRB that is subsequently extended. The first NAS signaling may include a positioning protocol message or a tracking area update message. It should be understood that, the first radio access network device is a target base station.

Optionally, after resuming the at least one dedicated signaling radio bearer, the first terminal device may derive a new key to encrypt the dedicated signaling radio bearer. In this case, the dedicated signaling radio bearer used to carry the first NAS signaling is encrypted by using the key.

Optionally, the first message may be an RRC resume request message, and the first terminal device sends the RRC resume request message and the first NAS signaling together to the first radio access network device. Specifically, the RRC resume request message is carried in a common signaling radio bearer SRB 0, and the first NAS signaling is carried in the dedicated signaling radio bearer, for example, the SRB 1, the SRB 2, or the SRB 3.

730: The first radio access network device receives the first message sent by the first terminal device, where the first message includes the first NAS signaling sent by the first terminal device to the core network device.

740: The first radio access network device sends a third message to the second radio access network device based on the received first message, where the third message includes the first NAS signaling sent by the first terminal device to the core network device. Optionally, the third message may include first indication information, and the first indication information indicates that the first NAS signaling includes a signaling type in a signaling or service data type. In other words, the first indication information indicates that a NAS PDU included in the third message is NAS signaling.

Specifically, optionally, if the first message received by the first radio access network device is the RRC resume request message, the third message sent by the first radio access network device to the second radio access network device may be a context obtaining request message, used to obtain the context of the first terminal device. The context obtaining request message includes the first NAS signaling sent by the first terminal device to the core network device and the first indication information. It should be understood that, the second radio access network device is an original serving base station of the first terminal device, and may also be referred to as an anchor base station.

750: The second radio access network device receives the third message sent by the first radio access network device.

760: The second radio access network device decodes, based on the received third message, the NAS PDU included in the third message to obtain the first NAS signaling, and sends a fifth message to the core network device, where the fifth message includes the first NAS signaling sent by the first terminal device to the core network device. Specifically, optionally, the fifth message may be an uplink non-access stratum NAS transport message. It should be understood that, the third message may include some other information, and the first NAS signaling can be obtained only by decoding the information.

770: The core network device receives the fifth message sent by the second radio access network device, and obtains, from the fifth message, the first NAS signaling sent by the first terminal device.

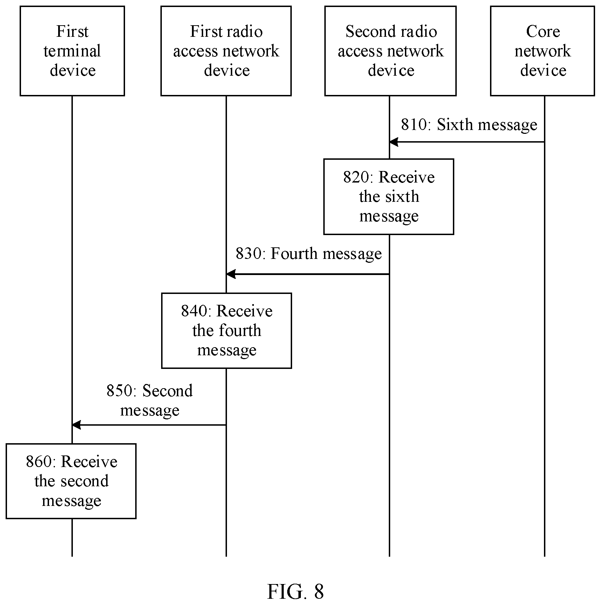

Optionally, after receiving the first NAS signaling sent by the first terminal device, if the core network device has downlink signaling of the first terminal device, the core network device sends the downlink signaling to the first terminal device. FIG. 8 is a schematic interaction flowchart of another signaling transmission method.

810: After receiving first NAS signaling sent by a first terminal device, if a core network device has downlink signaling of the first terminal device, the core network device sends a sixth message to a second radio access network device, where the sixth message includes second NAS signaling sent by the core network device to the first terminal device, and the sixth message may be a response message for the fifth message in FIG. 7. The second NAS signaling may include a positioning protocol message or a tracking area update response message.

Specifically, optionally, if the fifth message may be an uplink non-access stratum NAS transport message, the sixth message may be a downlink non-access stratum NAS transport message, and the downlink non-access stratum NAS transport message carries the second NAS signaling sent by the core network device to the first terminal device.

820: The second radio access network device receives the sixth message sent by the core network device.

830: The second radio access network device sends a fourth message to a first radio access network device based on the received sixth message, where the fourth message includes the second NAS signaling sent by the core network device to the first terminal device. Optionally, the fourth message may include second indication information, and the second indication information indicates that the second NAS signaling includes a signaling type in a signaling or service data type. In other words, the second indication information indicates that a NAS PDU included in the fourth message is NAS signaling. The fourth message may be a response message for the third message in FIG. 7.

If the third message is a context obtaining request message, the fourth message may be a context obtaining response message, and the context obtaining response message carries the second NAS signaling sent by the core network device to the first terminal device.

840: The first radio access network device receives the fourth message sent by the second radio access network device.

850: The first radio access network device sends a second message to the first terminal device based on the received fourth message, where the second message includes the second NAS signaling sent by the core network device to the first terminal device, and the second message may be a response message for the first message in FIG. 7.

The second NAS signaling is carried in at least one dedicated signaling radio bearer. To be specific, the second NAS signaling may be carried in an SRB 1, an SRB 2, an SRB 3, or another dedicated SRB that is subsequently extended. If the first terminal device resumes only one dedicated signaling radio bearer, the first NAS signaling and the second NAS signaling can be carried only in a same SRB. If the first terminal device resumes two or more dedicated signaling radio bearers, the first NAS signaling and the second NAS signaling may be carried in a same SRB, or may be carried in different SRBs.

Optionally, the second message may be a radio resource control RRC resume message or a radio resource control RRC release message. The first radio access network device may send the radio resource control RRC resume message and the second NAS signaling together to the first terminal device, or the first radio access network device may send the radio resource control RRC release message and the second NAS signaling together to the first terminal device. Specifically, the RRC resume message and the RRC release message are carried in the SRB 1. The second NAS signaling is carried in the SRB 1 or the SRB 2, or may be carried in the SRB 3 or the another dedicated SRB that is subsequently extended.

860: The first terminal device receives the second message sent by the first radio access network device, and obtains, from the second message, the second NAS signaling sent by the core network device.

It should be understood that, if the core network device does not receive the first NAS signaling sent by the first terminal device, but has the downlink signaling of the first terminal device, the core network device may also send the downlink signaling to the first terminal device by using a specific procedure in FIG. 8.

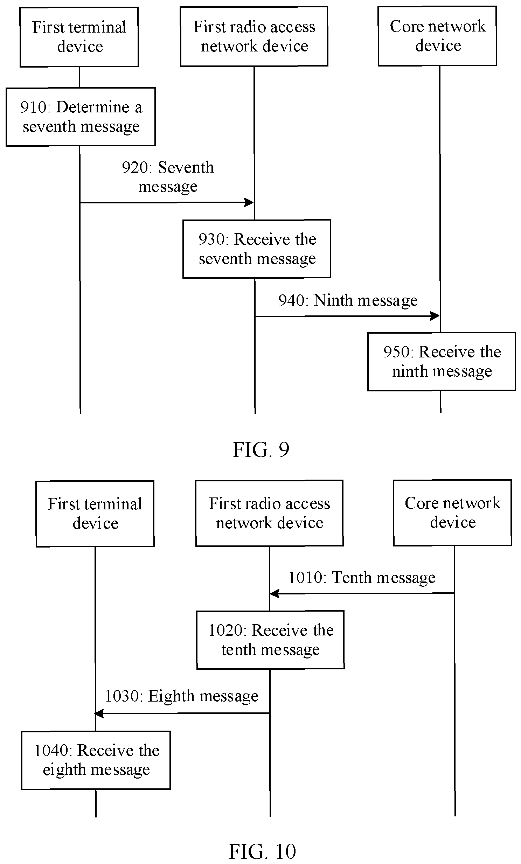

In the foregoing method, the first terminal device includes NAS signaling in a dedicated SRB for sending. An embodiment of this application provides another signaling transmission method. A first terminal device may include NAS signaling in a common SRB 0 for sending. FIG. 9 is a schematic interaction flowchart of another signaling transmission method.

910: When a first terminal device that is in an idle state or that is released from a connected state to an inactive state by an original serving base station (a second radio access network device) needs to transmit uplink NAS signaling, the first terminal device determines a seventh message, where the seventh message includes first non-access stratum NAS signaling that needs to be sent by the first terminal device to a core network device and third indication information, and the third indication information indicates that the first NAS signaling includes a signaling type in a signaling or service data type. The service data type includes a voice service of a terminal device, a data transmission service, and the like. In other words, the third indication information indicates that a NAS PDU included in the seventh message is NAS signaling.

Optionally, the first NAS signaling may include a positioning protocol message, a tracking area update message, or another message. This is not limited in this embodiment of this application.

Optionally, the seventh message may be an RRC early data transmission request (early data transmission request) message, and the seventh message includes a system architecture evolution-temporary mobile subscriber identity S-TMSI of the first terminal device, where the identifier is used to identify the first terminal device. The seventh message may alternatively be an RRC resume request message.

920: The first terminal device sends the seventh message to a first radio access network device by using a common signaling radio bearer. The first NAS signaling may be carried in an SRB 0, or may be carried in another common SRB that is subsequently extended. Optionally, the first terminal device may include the first NAS signaling and the RRC early data transmission request message in the SRB 0 and send the SRB 0 to the first radio access network device, or may include the first NAS signaling in the SRB 0, include the RRC resume request message in an SRB 1 or an SRB 2, and send the SRB 0 and the SRB 1 or the SRB 2 to the first radio access network device.

930: The first radio access network device receives the seventh message sent by the first terminal device. The first radio access network device may find, based on the S-TMSI of the first terminal device, the core network device corresponding to the first terminal device. The core network device may be an access and mobility management function (access and mobility management function, AMF).

940: The first radio access network device sends a ninth message to the core network device based on the received seventh message, where the ninth message includes the first non-access stratum NAS signaling sent by the first terminal device to the core network device.

Optionally, if the first terminal device is in the inactive state, the ninth message may be a newly created uplink message. The ninth message further includes an identifier of the first terminal device, and is used to notify the core network device that the first NAS signaling in the ninth message is sent by the first terminal device. The ninth message may be a newly created uplink message.

Optionally, if the first terminal device is in the idle state, the ninth message may be an initial message (initial message) used to establish an NG interface and used to establish a next generation (next generation, NG) interface, and the initial message used to establish the NG interface and the first NAS signaling may be sent to the core network device together.

950: The core network device receives the ninth message sent by the first radio access network device, and obtains, from the ninth message, the first NAS signaling sent by the first terminal device.

Optionally, after receiving the first NAS signaling sent by the first terminal device, if the core network device has downlink signaling of the first terminal device, the core network device sends the downlink signaling to the first terminal device. FIG. 10 is a schematic interaction flowchart of another signaling transmission method.

1010: After receiving first NAS signaling sent by a first terminal device, if a core network device has downlink signaling of the first terminal device, the core network device sends a tenth message to a first radio access network device, where the tenth message includes second NAS signaling sent by the core network device to the first terminal device, and the tenth message may be a response message for the ninth message in FIG. 9. The second NAS signaling may include a positioning protocol message or a tracking area update response message.

Specifically, optionally, if the first terminal device is in an idle state, and the ninth message is an initial message used to establish an NG interface and used to establish an NG interface, the tenth message may be a downlink non-access stratum generic transport (downlink non-access stratum generic transport) message, and the downlink non-access stratum generic transport message carries the second NAS signaling sent by the core network device to the first terminal device.

Specifically, optionally, if the first terminal device is in an inactive state, the tenth message further includes an identifier of the first terminal device, and is used to notify the first radio access network device that the second NAS signaling in the tenth message is sent by the core network device to the first terminal device. The tenth message may be a newly created downlink message.

1020: The first radio access network device receives the tenth message sent by the core network device.

1030: The first radio access network device sends an eighth message to the first terminal device based on the received tenth message by using a common signaling radio bearer, where the eighth message includes the second NAS signaling sent by the core network device to the first terminal device and fourth indication information, and the fourth indication information indicates that the second NAS signaling includes a signaling type in a signaling or service data type. In other words, the fourth indication information indicates that a NAS PDU included in the eighth message is NAS signaling. The eighth message may be a response message for the seventh message in FIG. 9.

If the seventh message is an early data transmission request message, the eighth message may be an early data transmission complete message. If the seventh message is an RRC resume request message, the eighth message may be an RRC resume message or an RRC release message.

The eighth message may be carried in an SRB 0, or may be carried in another common SRB that is subsequently extended. Optionally, the first radio access network device may include the second NAS signaling and the RRC early data transmission complete message together in the SRB 0 and send the SRB 0 to the first terminal device, or may include the second NAS signaling in the SRB 0, include the RRC resume message or the RRC release message in an SRB 1, and send the SRB 0 and the SRB 1 together to the first terminal device.

1040: The first terminal device receives the eighth message sent by the first radio access network device, and obtains, from the eighth message, the second NAS signaling sent by the core network device.

It should be understood that, in the technical solution provided in this embodiment of this application, the core network device may send the second NAS signaling to the first terminal device when receiving no signaling sent by the first terminal device, or may send the second NAS signaling to the first terminal device based on the first NAS signaling sent by the first terminal device. Similarly, the first terminal device may send the first NAS signaling to the core network device when needing to send uplink signaling, or may send the signaling to the core network device when receiving the second NAS signaling sent by the core network device. This is not limited in this embodiment of this application.

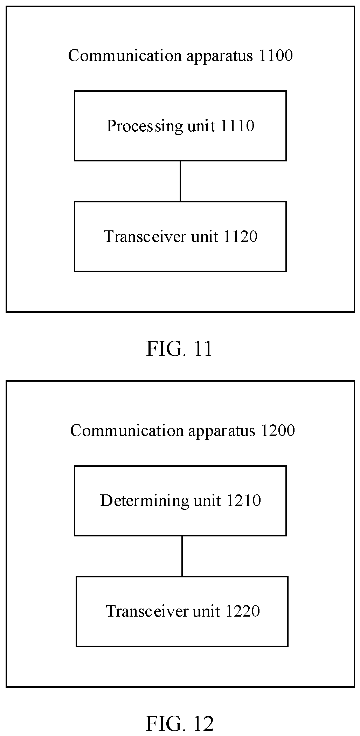

An embodiment of this application provides a communication apparatus 1100. The communication apparatus may be applied to the first terminal device in the method embodiments in FIG. 5 to FIG. 8, or may be a component, for example, a chip, for implementing the methods in embodiments in FIG. 5 to FIG. 8. FIG. 11 is a schematic block diagram of a communication apparatus 1100 according to an embodiment of this application.

The apparatus 1100 includes: a processing unit 1110 and a transceiver unit 1120. The processing unit 1110 is configured to resume at least one dedicated signaling radio bearer based on a stored context, where a first terminal device is in an inactive state; and the transceiver unit 1120 is configured to send a first message to a first radio access network device, where the first message includes first non-access stratum NAS signaling sent by the first terminal device to a core network device, and the first NAS signaling is carried in one of the at least one dedicated signaling radio bearer.

Optionally, the transceiver unit 1120 is further configured to receive a second message sent by the first radio access network device, where the second message includes second non-access stratum NAS signaling sent by the core network device to the first terminal device, and the second message is a response message for the first message.

Optionally, the first message includes a radio resource control RRC resume request message.

Optionally, the second message includes a radio resource control RRC resume message or a radio resource control RRC release message.

Optionally, the first NAS signaling includes a positioning protocol message or a tracking area update message, and the second NAS signaling includes a positioning protocol message or a tracking area update response message.

An embodiment of this application provides another communication apparatus. The communication apparatus may be applied to the first radio access network device in the method embodiments in FIG. 5 to FIG. 8, or may be a component, for example, a chip, for implementing the methods in embodiments in FIG. 5 to FIG. 8. The apparatus includes a transceiver unit, configured to receive a first message sent by a first terminal device, where the first message includes first non-access stratum NAS signaling sent by the first terminal device to a core network device, and the first terminal device is in an inactive state.

The transceiver unit is further configured to send a third message, where the third message includes the first NAS signaling.

Optionally, the transceiver unit is further configured to: receive a fourth message, where the fourth message includes second non-access stratum NAS signaling sent by the core network device to the first terminal device; and send a second message to the first terminal device, where the second message includes the second NAS signaling, and the second message is a response message for the first message.

Optionally, the transceiver unit is specifically configured to: send the third message to the core network device, and receive the fourth message sent by the core network device.

Optionally, the third message includes a path switch request message; and the fourth message includes a path switch response message.

Optionally, the transceiver unit is specifically configured to: send the third message to a second radio access network device, and receive the fourth message sent by the second radio access network device.

Optionally, the third message includes a context obtaining request message and first indication information, and the first indication information indicates that the first NAS signaling includes a signaling type in a signaling or service data type; and the fourth message includes a context obtaining response message and second indication information, and the second indication information indicates that the second NAS signaling includes a signaling type in a signaling or service data type.

An embodiment of this application provides another communication apparatus. The communication apparatus may be applied to the second radio access network device in the method embodiment in FIG. 7 or FIG. 8, or may be a component, for example, a chip, for implementing the method in the embodiment in FIG. 7 or FIG. 8. The apparatus includes a transceiver unit, configured to: receive a third message sent by a first radio access network device, where the third message includes first non-access stratum NAS signaling sent by a first terminal device to a core network device, and the first terminal device is in an inactive state; and send a fifth message to the core network device, where the fifth message includes the first NAS signaling.

Optionally, the transceiver unit is further configured to: receive a sixth message sent by the core network device, where the sixth message includes second non-access stratum NAS signaling sent by the core network device to the first terminal device; and send a fourth message to the first radio access network device, where the fourth message includes the second NAS signaling.

Optionally, the fifth message includes an uplink non-access stratum NAS transport message; and the sixth message includes a downlink non-access stratum NAS transport message.

An embodiment of this application provides another communication apparatus. The communication apparatus may be applied to the core network device in the method embodiments in FIG. 5 to FIG. 8, or may be a component, for example, a chip, for implementing the methods in embodiments in FIG. 5 to FIG. 8. The apparatus includes a transceiver unit, configured to receive a third message sent by a first radio access network device, where the third message includes first non-access stratum NAS signaling sent by a first terminal device to the core network device, and the first terminal device is in an inactive state.

Optionally, the transceiver unit is further configured to send a fourth message to the first radio access network device, where the fourth message includes second non-access stratum NAS signaling sent by the core network device to the first terminal device.

Optionally, the third message includes a path switch request message; and the fourth message includes a path switch response message.

An embodiment of this application provides another communication apparatus. The communication apparatus may be applied to the core network device in the method embodiments in FIG. 5 to FIG. 8, or may be a component, for example, a chip, for implementing the methods in embodiments in FIG. 5 to FIG. 8. The apparatus includes a transceiver unit, configured to receive a fifth message sent by a second radio access network device, where the fifth message includes first non-access stratum NAS signaling sent by a first terminal device to the core network device, and the first terminal device is in an inactive state.

Optionally, the transceiver unit is further configured to send a sixth message to the second radio access network device, where the sixth message includes second non-access stratum NAS signaling sent by the core network device to the first terminal device.

Optionally, the fifth message includes an uplink non-access stratum NAS transport message; and the sixth message includes a downlink non-access stratum NAS transport message.

An embodiment of this application provides another communication apparatus 1200. FIG. 12 is a schematic block diagram of a communication apparatus 1200 according to an embodiment of this application. The communication apparatus may be applied to the first terminal device in the method embodiment in FIG. 9 or FIG. 10, or may be a component, for example, a chip, for implementing the method in the embodiment in FIG. 9 or FIG. 10.

The apparatus 1200 includes: a determining unit 1210, configured to determine a seventh message, where the seventh message includes first non-access stratum NAS signaling sent by the first terminal device to a core network device and third indication information, the third indication information indicates that the first NAS signaling includes a signaling type in a signaling or service data type, and the first terminal device is in a non-connected state; and
a transceiver unit 1220, configured to send the seventh message to a first radio access network device by using a common signaling radio bearer.

Optionally, the transceiver unit 1220 is further configured to receive an eighth message sent by the first radio access network device, where the eighth message includes second non-access stratum NAS signaling sent by the core network device to the first terminal device and fourth indication information, the fourth indication information indicates that the second NAS signaling includes a signaling type in a signaling or service data type, and the eighth message is a response message for the seventh message.

Optionally, the seventh message includes an early data transmission request message; and the eighth message includes an early data transmission complete message, and the early data transmission request message includes an identifier of the first terminal device.

Optionally, the first NAS signaling includes a positioning protocol message or a tracking area update message, and the second NAS signaling includes a positioning protocol message or a tracking area update response message.

An embodiment of this application provides another communication apparatus. The communication apparatus may be applied to the first radio access network device in the method embodiment in FIG. 9 or FIG. 10, or may be a component, for example, a chip, for implementing the method in the embodiment in FIG. 9 or FIG. 10. The apparatus includes: a transceiver unit, configured to receive a seventh message sent by a first terminal device, where the seventh message includes first non-access stratum NAS signaling sent by the first terminal device to a core network device and third indication information, the third indication information indicates that the first NAS signaling includes a signaling type in a signaling or service data type, and the first terminal device is in a non-connected state.

The transceiver unit is further configured to send a ninth message to the core network device, where the ninth message includes the first NAS signaling.

Optionally, the transceiver unit is further configured to: receive a tenth message sent by the core network device, where the tenth message includes second non-access stratum NAS signaling sent by the core network device to the first terminal device; and send an eighth message to the first terminal device, where the eighth message includes the second non-access stratum NAS signaling sent by the core network device to the first terminal device and fourth indication information, and the fourth indication information indicates that the second NAS signaling includes a signaling type in a signaling or service data type.

Optionally, the first terminal device is in an inactive state; and ninth message and the tenth message each include an identifier of the first terminal device.

Optionally, the first terminal device is in an idle state; the ninth message includes an initial message used to establish a next generation NG interface; and the tenth message includes a downlink non-access stratum generic transport message.

An embodiment of this application provides another communication apparatus. The communication apparatus may be applied to the core network device in the method embodiment in FIG. 9 or FIG. 10, or may be a component, for example, a chip, for implementing the method in the embodiment in FIG. 9 or FIG. 10. The apparatus includes a transceiver unit, configured to receive a ninth message sent by a first radio access network device, where the ninth message includes first non-access stratum NAS signaling sent by a first terminal device to the core network device, and the first terminal device is in a non-connected state.

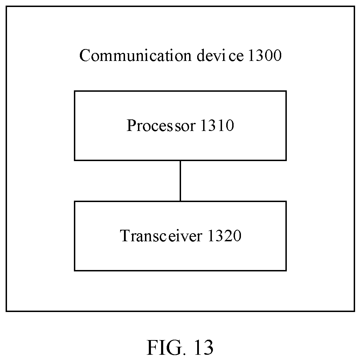

Optionally, the transceiver unit is further configured to send a tenth message to the first radio access network device, where the tenth message includes second non-access stratum NAS signaling sent by the core network device to the first terminal device, and the tenth message is a response message for the ninth message. An embodiment of this application provides a communication device 1300. FIG. 13 is a schematic block diagram of a communication device 1300 according to an embodiment of this application. The communication apparatus 1300 includes:
a processor 1310 and a transceiver 1320, where the transceiver 1320 is configured to: receive computer code or instructions, and transmit the computer code or the instructions to the processor, and the processor 1310 runs the computer code or the instructions, to implement the method in embodiments of this application.

An embodiment of this application provides a communication device, including a memory and a processor. The memory is configured to store a computer program, and the processor is configured to execute the computer program stored in the memory, so that the communication device performs the method in embodiments of this application. Optionally, the communication device may be the first terminal device, the first radio access network device, the second radio access network device, or the core network device in embodiments of this application.

The foregoing processor may be an integrated circuit chip, and has a signal processing capability. In an implementation process, steps in the foregoing method embodiments may be implemented by using a hardware integrated logic circuit in the processor or an instruction in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, the steps, and logic block diagrams that are disclosed in embodiments of this application may be implemented or performed. The general-purpose processor may be a microprocessor, or the processor may be any conventional processor or the like. The steps of the method disclosed with reference to embodiments of this application may be directly presented as being performed and completed by a hardware decoding processor, or performed and completed by a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads a message in the memory and completes the steps in the foregoing method in combination with hardware of the processor.

The memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that the memory may be integrated into the processor, the processor and the memory may be integrated on a same chip, or the processor and the memory may be separately located on different chips and connected in an interface coupling manner. This is not limited in embodiments of this application. An embodiment of this application provides a communication chip, including a processor and a communication interface. The processor is configured to read instructions to perform the method in embodiments of this application.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly learn that, for the purpose of convenient and brief description, for a specific working process of the foregoing system, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signaling transmission method, comprising:
resuming, by a first terminal device, at least one dedicated signaling radio bearer based on a stored context, wherein the first terminal device is in an inactive state; and
sending, by the first terminal device, a first message to a first radio access network device, wherein the first message comprises first non-access stratum NAS signaling sent by the first terminal device to a core network device, and the first NAS signaling is carried in one of the at least one dedicated signaling radio bearer.

2. The method according to claim 1, wherein the method further comprises:
receiving, by the first terminal device, a second message sent by the first radio access network device, wherein the second message comprises second non-access stratum NAS signaling sent by the core network device to the first terminal device, and the second message is a response message for the first message.

3. The method according to claim 1 or 2, wherein the first message comprises a radio resource control RRC resume request message.

4. The method according to claim 2 or 3, wherein the second message comprises a radio resource control RRC resume message or a radio resource control RRC release message.

5. The method according to any one of claims 2 to 4, wherein the first NAS signaling comprises a positioning protocol message or a tracking area update message, and the second NAS signaling comprises a positioning protocol message or a tracking area update response message.

6. A signaling transmission method, comprising:
receiving, by a first radio access network device, a first message sent by a first terminal device, wherein the first message comprises first non-access stratum NAS signaling sent by the first terminal device to a core network device, and the first terminal device is in an inactive state; and
sending, by the first radio access network device, a third message, wherein the third message comprises the first NAS signaling.

7. The method according to claim 6, wherein the method further comprises:
receiving, by the first radio access network device, a fourth message, wherein the fourth message comprises second non-access stratum NAS signaling sent by the core network device to the first terminal device; and
sending, by the first radio access network device, a second message to the first terminal device, wherein the second message comprises the second NAS signaling, and the second message is a response message for the first message.

8. The method according to claim 7, wherein the sending, by the first radio access network device, a third message comprises: sending, by the first radio access network device, the third message to the core network device; and
the receiving, by the first radio access network device, a fourth message comprises: receiving, by the first radio access network device, the fourth message sent by the core network device.

9. The method according to claim 8, wherein
the third message comprises a path switch request message; and
the fourth message comprises a path switch response message.

10. The method according to claim 7, wherein the sending, by the first radio access network device, a third message comprises: sending, by the first radio access network device, the third message to a second radio access network device; and
the receiving, by the first radio access network device, a fourth message comprises: receiving, by the first radio access network device, the fourth message sent by the second radio access network device.

11. The method according to claim 10, wherein
the third message comprises a context obtaining request message and first indication information, and the first indication information indicates that the first NAS signaling comprises a signaling type in a signaling or service data type; and
the fourth message comprises a context obtaining response message and second indication information, and the second indication information indicates that the second NAS signaling comprises a signaling type in a signaling or service data type.

12. A signaling transmission method, comprising:
receiving, by a second radio access network device, a third message sent by a first radio access network device, wherein the third message comprises first non-access stratum NAS signaling sent by a first terminal device to a core network device, and the first terminal device is in an inactive state; and
sending, by the second radio access network device, a fifth message to the core network device, wherein the fifth message comprises the first NAS signaling.

13. The method according to claim 12, wherein the method further comprises:
receiving, by the second radio access network device, a sixth message sent by the core network device, wherein the sixth message comprises second non-access stratum NAS signaling sent by the core network device to the first terminal device; and
sending, by the second radio access network device, a fourth message to the first radio access network device, wherein the fourth message comprises the second NAS signaling.

14. The method according to claim 13, wherein
the fifth message comprises an uplink non-access stratum NAS transport message; and
the sixth message comprises a downlink non-access stratum NAS transport message.

15. A signaling transmission method, comprising:
receiving, by a core network device, a third message sent by a first radio access network device, wherein the third message comprises first non-access stratum NAS signaling sent by a first terminal device to the core network device, and the first terminal device is in an inactive state.

16. The method according to claim 15, wherein the method further comprises:
sending, by the core network device, a fourth message to the first radio access network device, wherein the fourth message comprises second non-access stratum NAS signaling sent by the core network device to the first terminal device.

17. A signaling transmission method, comprising:
receiving, by a core network device, a fifth message sent by a second radio access network device, wherein the fifth message comprises first non-access stratum NAS signaling sent by a first terminal device to the core network device, and the first terminal device is in an inactive state.

18. The method according to claim 17, wherein the method further comprises:
sending, by the core network device, a sixth message to the second radio access network device, wherein the sixth message comprises second non-access stratum NAS signaling sent by the core network device to the first terminal device.

19. A signaling transmission method, comprising:
determining, by a first terminal device, a seventh message, wherein the seventh message comprises first non-access stratum NAS signaling sent by the first terminal device to a core network device and third indication information, the third indication information indicates that the first NAS signaling comprises a signaling type in a signaling or service data type, and the first terminal device is in a non-connected state; and
sending, by the first terminal device, the seventh message to a first radio access network device by using a common signaling radio bearer.

20. The method according to claim 19, wherein the method further comprises:
receiving, by the first terminal device, an eighth message sent by the first radio access network device, wherein the eighth message comprises second non-access stratum NAS signaling sent by the core network device to the first terminal device and fourth indication information, the fourth indication information indicates that the second NAS signaling comprises a signaling type in a signaling or service data type, and the eighth message is a response message for the seventh message.

21. The method according to claim 20, wherein
the seventh message comprises an early data transmission request message; and
the eighth message comprises an early data transmission complete message, and the early data transmission request message comprises an identifier of the first terminal device.

22. A signaling transmission method, comprising:
receiving, by a first radio access network device, a seventh message sent by a first terminal device, wherein the seventh message comprises first non-access stratum NAS signaling sent by the first terminal device to a core network device and third indication information, the third indication information indicates that the first NAS signaling comprises a signaling type in a signaling or service data type, and the first terminal device is in a non-connected state; and
sending, by the first radio access network device, a ninth message to the core network device, wherein the ninth message comprises the first NAS signaling.

23. The method according to claim 22, wherein the method further comprises:
receiving, by the first radio access network device, a tenth message sent by the core network device, wherein the tenth message comprises second non-access stratum NAS signaling sent by the core network device to the first terminal device; and
sending, by the first radio access network device, an eighth message to the first terminal device, wherein the eighth message comprises the second non-access stratum NAS signaling sent by the core network device to the first terminal device and fourth indication information, and the fourth indication information indicates that the second NAS signaling comprises a signaling type in a signaling or service data type.

24. The method according to claim 23, wherein
the first terminal device is in an inactive state; and
the ninth message and the tenth message each comprise an identifier of the first terminal device.

25. The method according to claim 23, wherein
the first terminal device is in an idle state;
the ninth message comprises an initial message used to establish a next generation NG interface; and
the tenth message comprises a downlink non-access stratum generic transport message.

26. A signaling transmission method, comprising:
receiving, by a core network device, a ninth message sent by a first radio access network device, wherein the ninth message comprises first non-access stratum NAS signaling sent by a first terminal device to the core network device, and the first terminal device is in a non-connected state.

27. The method according to claim 26, wherein the method further comprises:
sending, by the core network device, a tenth message to the first radio access network device, wherein the tenth message comprises second non-access stratum NAS signaling sent by the core network device to the first terminal device, and the tenth message is a response message for the ninth message.

28. A communication apparatus, comprising a unit configured to implement a function of the method according to any one of claims 1 to 27.

29. A communication device, comprising a processor and a transceiver, wherein the transceiver is configured to: receive computer code or instructions, and transmit the computer code or the instructions to the processor, and the processor runs the computer code or the instructions, to perform the method according to any one of claims 1 to 27.

30. A computer-readable storage medium, wherein
the computer-readable medium stores a computer program; and
when the computer program is run on a computer, the computer is enabled to perform the method according to any one of claims 1 to 27.
